# FASCICULE DE BREVET EUROPEEN

(11) **EP 1 111 106 B1**
(45) Date de publication et mention de la délivrance du brevet: **23.10.2002**
(21) Numéro de dépôt: 00420257.8
(22) Date de dépôt: 12.12.2000
(51) Int. Cl.: D03C 1/00, F16D 11/16

(54) **Ratiére rotative pour métier à tisser et métier à tisser équipé d'une telle ratière**
Rotationsschaftmaschine für Webmaschinen und Webmaschine mit einer solchen Schaftmaschine
Rotary dobby for weaving looms and loom with such a dobby

(30) Priorité: 14.12.1999 FR 9915776
(43) Date de publication de la demande: 27.06.2001
(73) Titulaire: STÄUBLI FAVERGES, 74210 Faverges (FR)
(72) Inventeur: Palau, Joseph, 74410 Saint-Jorioz (FR)
(74) Mandataire: Myon, Gérard Jean-Pierre

(56) Documents cités:
- EP-A- 0 185 780
- EP-A- 0 607 632
- DE-A- 2 909 131
- FR-A- 2 540 524
- FR-A- 2 757 882

## Description

L'invention a trait à une ratière rotative pour la commande des cadres de lisses montés sur un métier à tisser et à un métier à tisser équipé d'une telle ratière.

Dans les ratières rotatives, le mouvement vertical alternatif des cadres de lisses est assuré par des ensembles bielle-levier oscillants, ces ensembles oscillants étant commandées par des éléments d'actionnement en forme d'excentrique. Ces éléments d'actionnement sont montés sur un arbre principal d la ratière qui est animé d'un mouvement de rotation intermittent et, lors de chaque arrêt de cet arbre, un dispositif de lisage commande la solidarisation de l'élément d'actionnement avec l'arbre pour commander la pièce oscillante en fonction du dessin ou armure à obtenir sur le tissu en cours de tissage.

Par FR-A-2 540 524, on connaît une ratière rotative dans laquelle cette solidarisation sélective est obtenue grâce à un plateau solidaire d'un excentrique formant élément d'actionnement et comprenant deux entailles diamétralement opposées aptes à coopérer avec le bec de deux leviers pivotants commandés par un dispositif de lisage. Le plateau porte un axe sur lequel est articulé un crochet prévu pour s'engager sélectivement dans des encoches radiales du disque. En cours de fonctionnement, ce crochet travaille alternativement en traction et en compression alors qu'il subit des accélérations importantes. Ce crochet est donc soumis à des efforts de flexion intense, ce qui entraîne une fatigue de son matériau constitutif et peut conduire à la rupture d'un crochet, ce qui rend la ratière inutilisable. La section d'un tel crochet ne peut que difficilement être augmentée du fait de l'encombrement réduit et de la faible inertie qu'il doit présenter, notamment pour un fonctionnement à haute vitesse de la ratière. Par ailleurs, l'axe d'articulation du crochet sur le plateau est en porte-à-faux par rapport à ce plateau et travaille sous une charge alternée, de telle sorte qu'il peut également se rompre dans certaines conditions d'utilisation. En outre, son implantation sur le plateau est délicate.

EP-A-0 185 780 divulgue une ratière dans laquelle deux verrous sont utilisés pour solidariser un excentrique et un arbre d'entrée. Cette structure permet l'utilisation de verrous compacts mais ces verrous sont articulés autour d'axes qui sont également en porte-à-faux, de sorte que les risques de rupture évoqués ci-dessus en référence à la ratière de FR-A-2 540 524 sont également présents dans ce dispositif. En outre, les axes de pivotement sont susceptibles de se déchausser par rapport aux excentriques sur lesquels ils sont emmanchés ou rivetés. Un tel dispositif ne peut donc pas fonctionner à haute vitesse et sous fortes charges.

C'est à ces inconvénients qu'entend plus particulièrement remédier l'invention en proposant une ratière rotative apte à fonctionner à haute vitesse et sous fortes charges et dans laquelle les risques de rupture des éléments d'accouplement d'un élément d'actionnement et d'un disque sont sensiblement diminués, voire supprimés.

Dans cet esprit, l'invention concerne une ratière rotative pour métier à tisser comprenant, au niveau de chacune de ses lames, une pièce oscillante, attelée à un cadre de lisse et associée à un élément d'actionnement monté fou sur un arbre principal de la ratière, un disque solidaire de cet arbre principal et au moins un verrou commandé d'accouplement en rotation de cet élément et de ce disque, ce verrou formant une surface d'appui sélectif contre une surface de la tranche de ce disque. Cette ratière est caractérisée en ce que ce verrou est articulé, par contact glissant d'un secteur globalement cylindrique contre un secteur complémentaire d'une butée extérieure au verrou et solidaire de l'élément d'actionnement, et en ce que la section de cette butée, selon une direction radiale par rapport à un axe géométrique de pivotement du verrou opposée à la surface d'appui précitée, s'étend au-delà d'un cylindre géométrique de glissement des secteurs précités l'un contre l'autre.

Grâce à l'invention, chaque verrou est sollicité uniquement en compression entre sa surface d'appui contre la tranche du disque et son secteur d'appui et de glissement contre la butée, alors que la butée a une géométrie lui permettant de résister efficacement aux efforts transmis par le verrou, sans risque de rupture ou de désolidarisation par rapport à l'élément d'actionnement. En particulier, il n'est pas nécessaire de prévoir un arbre formant axe de pivotement du verrou puisque celui-ci est directement en appui contre la butée qui peut être massive. La butée peut être monobloc avec la partie principale de l'élément d'actionnement ou rapporté sur celui-ci par tout moyen approprié.

Selon un premier mode de réalisation avantageux de l'invention, le secteur globalement cylindrique du verrou est convexe et centré sur l'axe géométrique de pivotement, ce secteur et la surface d'appui précités étant disposés de part et d'autre de cet axe.

Selon un second mode de réalisation également avantageux de l'invention, le secteur globalement cylindrique du verrou est concave et centré sur l'axe géométrique de pivotement, la section précitée de la butée ayant une longueur supérieure au diamètre du cylindre géométrique de glissement.

Selon des aspects avantageux mais non obligtoires de l'invention, qui peuvent être appliqués aux deux modes de réalisation mentionnés ci-dessus, la ratière incorpore une ou plusieurs des caractéristiques suivantes :
- Les efforts exercés par les butées et le disque sur le verrou sont essentiellement radiaux par rapport à l'axe de pivotement et opposés, ces efforts étant dirigés sensiblement selon la direction précitée. Cette caractéristique induit que la résultante des efforts de compression subis par le verrou sur chacune de ses surfaces est sécante avec l'axe géométrique de pivotement, le verrou étant uniquement sollicité en compression, de telle sorte qu'il peut être compact et léger sans risque de rupture.
- Le verrou est en appui contre des moyens élastiques de rappel en position engagée par rapport au disque. Ces moyens permettent de conférer au verrou une position stable lorsqu'il n'est pas soumis à un effort dû au dispositif de lisage.
- La butée forme au moins un logement de réception du verrou, ce logement étant disposé en déport par rapport à une surface principale de l'élément d'actionnement, en regard de la tranche du disque. Grâce à cet aspect de l'invention, le logement est globalement aligné avec la tranche du disque, ce qui permet de faire travailler le verrou uniquement en compression. Dans ce cas, on peut prévoir que deux logements de réception des deux verrous sont prévus, entre lesquels est défini un espace de coulissement d'un organe de manoeuvre de verrous reçus dans ces logements, cet organe de manoeuvre étant apte à exercer sur ces verrous un effort de poussée, à l'encontre de moyens élastiques de rappel, cet effort produisant un couple de rotation de chaque verrou autour de son axe de pivotement. Cet organe de manoeuvre est avantageusement sélectivement commandé en déplacement par l'un de deux leviers oscillants pilotés par un dispositif de lisage. On peut également prévoir que les logements sont fermés par un capot commun de retenue des verrous, des moyens de rappel et de l'organe de manoeuvre par rapport à l'élément d'actionnement.

L'invention concerne également un métier à tisser équipé d'une ratière telle que précédemment décrite. Un tel métier est susceptible de fonctionner à haute vitesse, sans risque de rupture des éléments constitutifs de la ratière, de telle sorte qu'il est plus fiable et plus économique que les métiers à tisser de l'état de la technique.

L'invention sera mieux comprise et d'autres avantages de celle-ci apparaîtront plus clairement à la lumière de la description qui va suivre de deux modes de réalisation d'une ratière conforme à son principe, donnée uniquement à titre d'exemple et faite en référence aux dessins annexés dans lesquels :
- La figure 1 est une coupe transversale schématique d'une ratière conforme à l'invention ;
- La figure 2 est une vue de détail à plus grande échelle du détail II à la figure 1 ;
- La figure 3 est une coupe partielle selon la ligne III-III à la figure 1 ;
- La figure 4 est une coupe partielle selon la ligne IV-IV à la figure 1 ;
- La figure 5 est une coupe partielle selon la ligne V-V à la figure 1 ;
- La figure 6 est une vue partielle, en perspective éclatée, de certains éléments constitutifs essentiels de la ratière des figures 1 à 5 et
- La figure 7 est une vue analogue à la figure 2 pour une ratière conforme à un second mode de réalisation de l'invention.

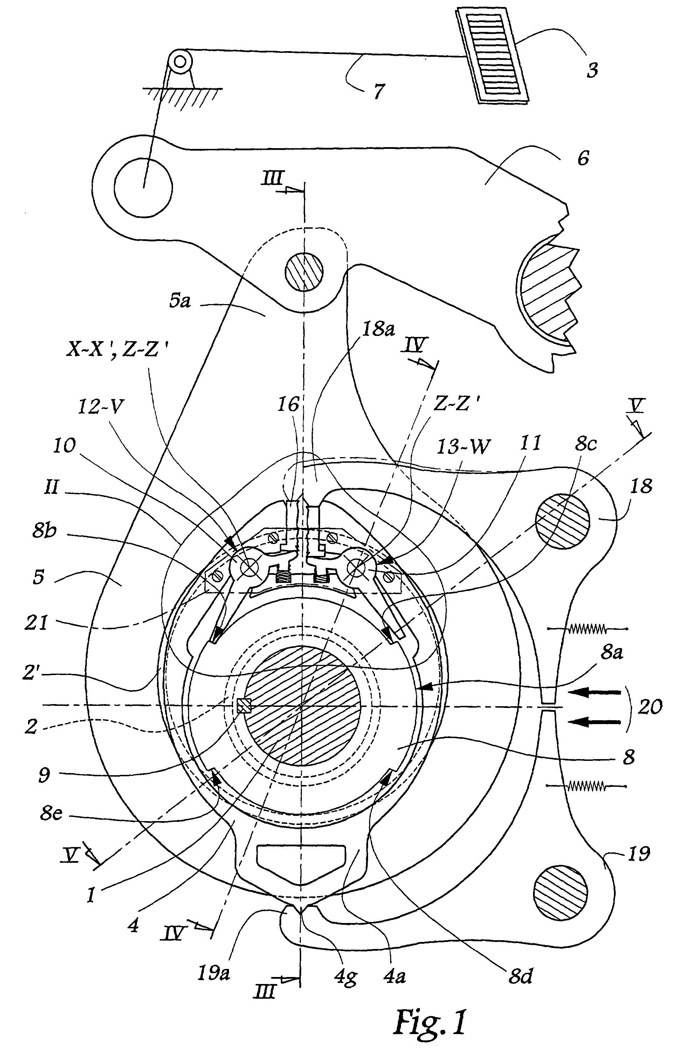

La ratière représentée à la figure 1 comprend un arbre principal 1 animé d'un mouvement de rotation intermittent avec arrêt tous les demi-tours. Cet arbre 1 reçoit une série de roulements 2 en nombre égal à celui des cadres de lisses ou lames 3 du métier. Sur chaque roulement 2 est monté fou un excentrique 4 sur lequel est montée folle l'ouverture d'une bielle 5, autour d'un second roulement 2'. L'extrémité libre 5a de la bielle 5 est attelée à un bras pivotant 6 qui assure, grâce à un câble 7, le déplacement vertical du cadre de lisses 3 de la lame envisagée. L'excentrique 4 constitue donc un élément d'actionnement de la bielle oscillante 5.

Entre deux excentriques 4 contigus, l'arbre 1 est solidaire d'un disque d'entraînement 8 auquel il est relié par une clavette 9. Le bord périphérique 8a du disque 8 forme quatre épaulement 8b, 8c, 8d et 8e ménagés dans l'épaisseur ou tranche du disque 8.

Conformément à l'invention, deux verrous 10 et 11 sont montés dans des logements 12 et 13 prévus sur une face de l'excentrique 4, en déport par rapport à la surface principale 4a de cet excentrique. Chaque logement 12 ou 13 est formé par une première butée 4b, monobloc avec l'excentrique 4 et faisant saillie par rapport à la surface 4a, et par une seconde butée 4c, également monobloc avec l'excentrique 4 et s'étendant en saillie par rapport à la surface 4a. Les butées 4b et 4c définissent entre elles un volume sensiblement cylindrique V dont on note X-X' l'axe géométrique. On note Σ_{b} la surface concave de la butée 4b en forme de secteur angulaire centré sur l'axe X-X'. On note Σ_{c} la surface concave de la butée en forme de secteur angulaire également entré sur l'axe X-X' et de même rayon que la surface Σ_{b}.

Un volume V' est également défini entre les butées 4b et 4c, à l'extérieur du volume V. Les volumes V et V' forment ensemble le logement 12.

De la même manière, le logement 13 est formé de deux volumes W et W' définis entre des butées 4d et 4e de l'excentrique 4, les butées 4c et 4e étant constituées par une même partie de l'excentrique 4 en saillie par rapport à la surface 4a. On note Σ_{d} et Σₑ les surfaces concaves des butées 4d et 4e en forme de secteurs angulaires qui sont centrées sur l'axe X-X' du volume W.

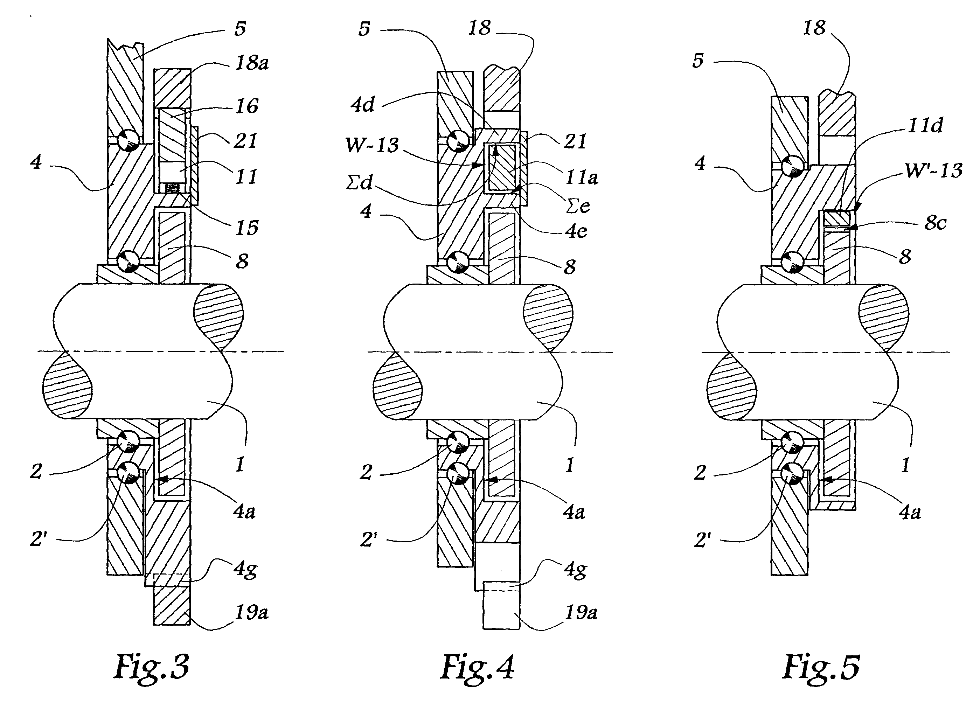

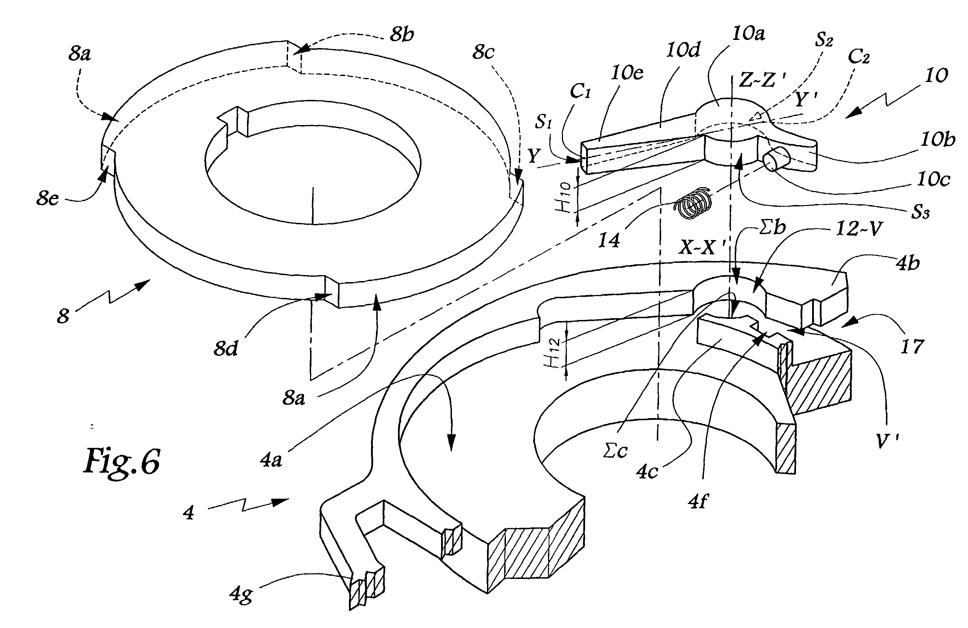

Comme il ressort des figures 3, 4 et 6, les butées 4b à 4e sont disposées en regard de la tranche du bord périphérique 8a du disque 8, de sorte que les logements 12 et 13 et les verrous 10 et 11 sont également disposés au niveau de cette tranche, c'est-à-dire dans l'épaisseur du disque 8.

Le verrou 10 comprend une première partie 10a globalement cylindrique et de hauteur H₁₀ sensiblement égale à la hauteur H₁₂ du logement 12. La partie 10a se prolonge par une patte 10b portant un doigt 10c de centrage d'un ressort 14 en appui dans un logement 4f de la butée 4c.

La partie 10a se prolonge également par une extension 10d centrée sur un rayon Y-Y' de la partie 10a. L'extrémité 10e de l'extension 10d est globalement plane et rectangulaire et l'on note C₁ le centre de la surface S₁ de cette extrémité. Le rayon Y-Y' coupe la surface S₁ en son centre C₁ ou à proximité immédiate de ce centre. On note Z-Z' l'axe de symétrie de la partie 10a du verrou 10. En configuration montée de la ratière représentée aux figures 1 à 5, les axes X-X' et Z-Z' sont confondus car le volume V a un rayon sensiblement égal au rayon de la partie 10a, ce qui permet un positionnement précis du verrou 10 dans le logement 12. Les axes X-X' et Z-Z' définissent donc un axe géométrique de pivotement du verrou 10 dans le logement 12.

On note S₂ la partie de la surface radiale de la partie 10a opposée à l'extension 10d qui forme un secteur angulaire centré sur l'axe Z-Z'. On note C₂ le centre de cette surface S₂ qui est défini comme le point d'intersection du prolongement du rayon Y-Y' avec la surface S₂. Les surfaces S₂ et Σ_{b} sont en contact glissant l'une contre l'autre.

On note S₃ la partie de la surface radiale de la partie 10a séparée de la surface S₂ par la patte 10b et l'extension 10d, la surface S₃ formant un second secteur angulaire à la périphérie de la partie 10a. Les surfaces S₃ et Σ_{c} sont en contact glissant l'une contre l'autre.

La surface S₁ du verrou 10 est prévue pour venir sélectivement en appui contre l'un des épaulements 8b et 8d, en fonction de la position du disque 8.

De la même manière, la surface correspondante S'₁ du verrou 11 est prévue pour venir sélectivement en appui contre l'un des épaulement 8_{c} et 8ₑ. La partie de surface cylindrique externe S'₂ de la partie 11a du verrou 11 est en contact glissant contre le secteur angulaire formé par la surface Σ_{d}.

Un ressort 15 est associé au verrou 11 qui comprend également une partie globalement cylindrique 11a, une patte 11b et une extension 11d, les verrous 10 et 11 étant identiques. On note également Z-Z' l'axe de symétrie de la partie 11a du verrou 11.

La partie de surface cylindrique S'₃, séparée de la surface S'₂ par la patte 11b et l'extension 11d, est en contact glissant contre le secteur angulaire formé par la surface Σₑ.

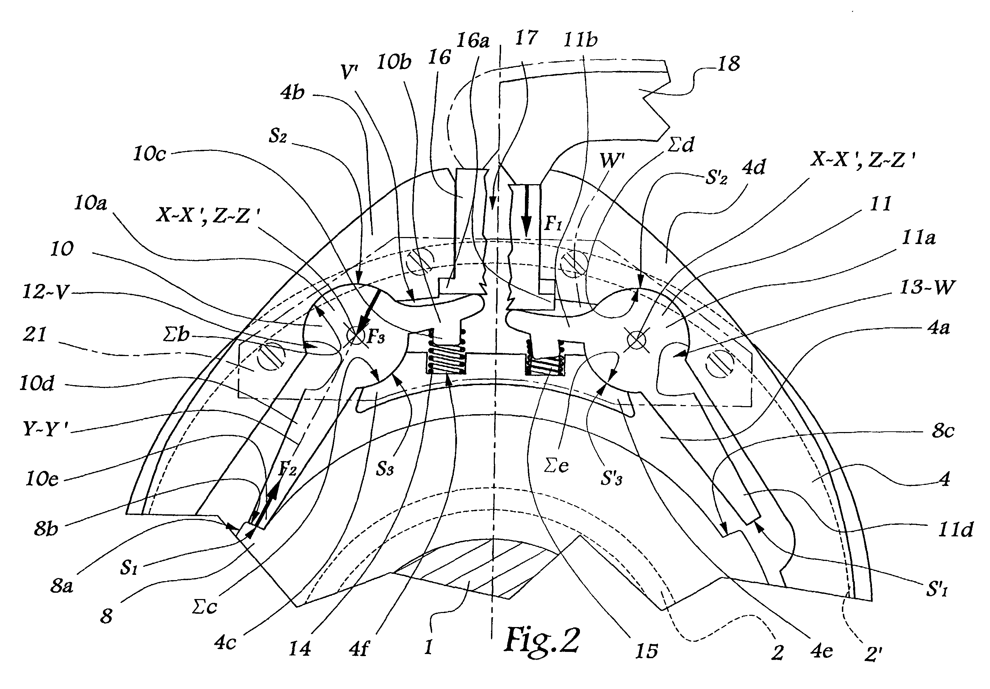

Chaque verrou 10 et 11 est apte à être déplacé entre une position où il est en appui contre l'un des épaulements du plateau 8, comme représenté pour le verrou 10 aux figures 1 et 2, et une position où il est dégagé par rapport à ces épaulements, comme représenté pour le verrou 11, aux figures 1 et 2. Le passage entre ces deux positions a lieu par pivotement du verrou 10 ou 11 autour de son axe Z-Z', un glissement ayant lieu entre les secteurs S₂ et Σ_{b}, S₃ et Σ_{c} d'une part, S'₂ et Σ_{d}, S'₃ et Σₑ d'autre part.

Comme il ressort plus clairement de la figure 2, la butée 4b s'étend au-delà du verrou 10 par rapport à la surface S₂. Plus précisément, en considérant la direction Y-Y' à partir de l'axe Z-Z', à l'opposé de la surface S₁ du verrou 10, la section de la butée 4b selon cette direction s'étend au-delà du cylindre de glissement du verrou 10 dans le logement 12, ce cylindre correspondant en fait à l'enveloppe du volume V à la bordure duquel les secteurs S₂, S₃, Σ_{b} et Σ_{c} sont en contact glissant.

La commande des verrous 10 et 11 entre les deux positions précitées est effectuée grâce à un coulisseau 16 prévu pour être déplacé en translation dans un canal 17 défini entre les butées 4b et 4d. Ce coulisseau est en appui contre les extrémités des pattes 10b et 11b des verrous 10 et 11 et est susceptible de transmettre un effort de poussée F₁ exercé par le bec 18a ou 19a d'un levier oscillant 18 ou 19 commandé par un dispositif de lisage 20. Sur les figures 1 et 2, le levier 18 est représenté en traits pleins dans sa position d'appui sur les verrous 10 et 11 et en traits mixtes dans sa position dégagée par rapport à ces verrous. Dans sa position en traits pleins, le levier 18 exerce l'effort F₁ sur les deux verrous 10 et 11, comme représenté pour le verrou 11. Le coulisseau 16 est pourvu de talons 16a de retenue dans le canal 17 par coopération de forme avec les butées 4b et 4d. Il ne risque donc pas d'être éjecté radialement lors de la rotation de l'excentrique 4.

Lorsque le coulisseau 16 est en regard de l'un des becs, par exemple 18a, une partie 4g de l'excentrique 4 est en prise avec le bec opposé, par exemple 19a. Les becs 18a et 19a peuvent être conformes aux enseignements techniques respectifs de FR-A-2 757 882 et FR-A-2 757 883.

Un capot 21, représenté en traits mixtes pour la clarté des dessins, recouvre les butées 4b à 4e et permet d'emprisonner les verrous 10 et 11, les ressorts 14 et 15 et le coulisseau 16 entre ces butées, sans empêcher le pivotement des verrous 10 et 11 autour de leurs axes de pivotement respectifs Z-Z'.

Lorsque le verrou 10 est en appui contre l'épaulement 8b, comme représenté sur les figures, il subit un effort F₂ exercé par cet épaulement sur la surface S₁ et un effort de réaction F₃ exercé par la surface cylindrique interne de la butée 4b sur la surface S₂. Comme les surfaces S₁ et S₂ sont disposées en vis-à-vis de part et d'autre de l'axe Z-Z', le verrou 10 est sollicité uniquement en compression entre ces surfaces, les efforts F₂ et F₃ étant dirigés, selon la direction Y-Y', vers l'axe Z-Z'. Ainsi, le verrou 10 peut subir des efforts F₂ et F₃ intenses sans risque de déformation élastique ou de rupture. Par ailleurs, aucun arbre ou doigt d'articulation du verrou 10 sur l'excentrique 4 n'étant prévu, un tel arbre ou doigt ne travaille pas en porte-à-faux, ce qui est à rapprocher du fait que l'articulation en pivotement du verrou 10 dans le logement 12 est obtenue par la coopération des surfaces radiales externes S₂ et S₃ de la partie 10a et des surfaces cylindriques Σ_{b} et Σ_{c} des butées 4d et 4c.

Le fonctionnement de la ratière de l'invention est tel que l'écartement des extensions 10d et 11d des verrous 10 et 11 par rapport au disque 8 est obtenu simultanément lorsque l'un des becs 18a ou 19a pousse le coulisseau 17 en direction de l'arbre 1. Cette simultanéité du mouvement de retrait permet donc un fonctionnement rapide de la ratière dans les deux sens de rotation de l'arbre 1 autour de son axe central.

Par contre, la mise en prise des verrous par rapport aux épaulements du disque 8 peut être différenciée puisque les verrous peuvent avoir des mouvements à des vitesses différentes sous l'effet des ressorts 14 et 15 qui repoussent les pattes 10b et 11b et le coulisseau 17, de telle sorte que les extensions 10d et 11d sont rabattues séquentiellement vers les épaulements 8b à 8e. Il est donc possible de prévoir que les deux verrous viennent successivement en regard des épaulements correspondants, ce qui permet un fonctionnement à vitesse élevée avec un jeu faible entre les surfaces d'extrémités S₁ et S'₁ des verrous 10 et 11 et les épaulements précités du disque 8.

En d'autres termes, lorsque le disque 8 tourne dans le sens des aiguilles d'une montre à la figure 2, le verrou 10 vient immédiatement en prise contre l'épaulement 8b, le verrou 11 pouvant pivoter ultérieurement pour venir en appui contre l'épaulement 8c.

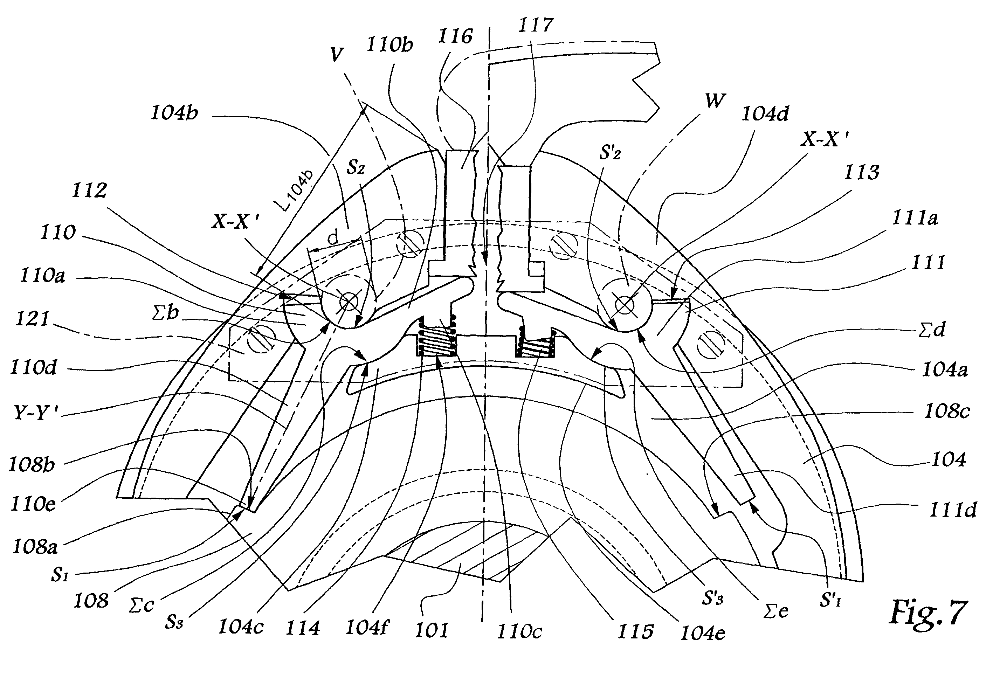

Dans le second mode de réalisation de l'invention représenté à la figure 7, les éléments analogues à ceux du premier mode de réalisation portent des références identiques augmentées de 100. Dans ce mode de réalisation, un arbre 101 sert à l'entraînement d'un excentrique 104 au moyen d'un disque 108 dont le bord périphérique 108a porte des épaulements, dont deux sont visibles sur cette figure respectivement avec les références 108b et 108c.

Comme précédemment, l'excentrique 104 porte des butées 104b, 104c, 104d et 104e qui font saillies à partir de la surface principale 104a de l'excentrique 104 de telle sorte qu'elles définissent deux logements 112 et 113 au niveau de la tranche 108a du disque 108. Ces logements sont prévus pour accomoder deux verrous 110 et 111.

Le verrou 110 comprend une partie centrale 110a définissant un secteur globalement cylindrique et concave S₂ opposé à une patte 110d à l'extrémité 110e de laquelle est défini une surface S₁ d'appui sélectif contre un des épaulements 108b ou équivalents du disque 108. On note Z-Z' l'axe géométrique de la surface S₂. La partie 110a se prolonge également par une patte 110b pourvue d'un doigt 110c lui permettant de coopérer avec un ressort 114 reçu dans un logement 104f ménagé dans la butée 104c.

La butée 104b forme un secteur angulaire convexe Σ_{b} centré sur un axe géométrique X-X' situé dans la masse de la butée 104b. Les secteurs S₂ et Σ_{b} ont des rayons sensiblement identiques et forment des surfaces de glissement du verrou 110 à l'intérieur du logement 112 entre une position engagée de la surface S₁ contre un épaulement 108b ou équivalent et une position dégagée, telle que représentée pour le verrou 111. En configuration montée du verrou 110 dans le logement 112, les axes X-X' et Z-Z' sont confondus. On note V le volume cylindrique centré sur l'axe X-X' et dont le secteur Σ₂ forme une partie de la surface radiale.

La butée 104b se prolonge au-delà du volume V qui est représentée en trait mixte à la figure 7. Plus précisément, la longueur L₁₀₄_{b} de la butée 104 à partir de la surface Σ_{b} et selon la direction Y-Y' de l'extension 110d est supérieure au diamètre d du cylindre géométrique V de glissement des surfaces S₂ et Σ_{b}. Ainsi, la butée 104b présente une solidité importante lui permettant de résister efficacement aux efforts transmis par le verrou 110 lors de chaque mise en contact de la surface S₁ et de l'épaulement 108b ou équivalent du disque 108.

La construction relative à la butée 104d est identique et -celle-ci se prolonge au-delà du cylindre géométrique W centré sur l'axe X-X' de pivotement du verrou 111 à l'intérieur du logement 113 et bordé par un secteur cylindrique convexe Σ_{d} contre lequel est en appui glissant un secteur concave formé par une syrface cylindrique S'₂ du verrou 111 de rayon sensiblement égal à celui du secteur Σ_{d}.

Les butées 104c et 104e forment respectivement des secteurs cylindriques concaves Σ_{c} et Σₑ centrés sur les axes X-X' et de rayon plus important que ceux des secteurs Σ_{b} et Σ_{d}. Les secteurs Σ_{c} et Σₑ sont prévus pour coopérer avec des surfaces cylindriques S₃ et S'₃ des parties centrales 110a et 111a des verrous 110 et 111, ces surfaces S₃ et S'₃ étant centrées sur les axes Z-Z' de ces verrous.

Comme dans le premier mode de réalisation, une surface plane d'extrémité S'₁ d'une extension 111d du verrou 111 est sélectivement mise en contact avec un épaulement 108c ou équivalent du disque 108.

Un coulliseau 116 est mobile en translation pour la commande des verrous 110 et 111, ce coulisseau exerçant un effort F₁ à l'encontre des efforts de rappel générés par le ressort 114 et un ressort analogue 115 intercalé entre une patte 111b du verrou 111 et la butée 104e.

Un capot de protection 121 est également prévu pour le maintient en position des éléments 110, 111, 114, 115 et 116 dans les logements 112 et 113 et dans le canal 117.

## Revendications

1. Ratière rotative pour métier à tisser comprenant, au niveau de chacune de ses lames,
- une pièce oscillante (5), attelée à un cadre de lisses (3) et associée à un élément d'actionnement (4 ; 104) monté fou sur un arbre principal (1 ; 101) de ladite ratière,
- un disque (8 ; 108) solidaire dudit arbre principal et
- au moins un verrou commandé (10, 11 ; 110, 111) d'accouplement en rotation dudit élément et dudit disque, ledit verrou formant une surface (S₁, S'₁) d'appui sélectif contre une surface (8b - 8e ; 108b, 108c) de la tranche (8a ; 108a) dudit disque,
**caractérisée en ce que** ledit verrou (10, 11 ; 110, 111) est articulé, par contact glissant d'au moins un secteur (S₂, S₃, S'₂, S'₃) globalement cylindrique contre un secteur complémentaire (Σ_{b}, Σ_{c}, Σ_{d}, Σₑ) d'une butée (4b-4e , 104b-104e) extérieure audit verrou et solidaire dudit élément d'actionnement (4 ; 104) et **en ce que** la section de ladite butée, selon une direction (Y-Y') radiale par rapport à un axe géométrique de pivotement (Z-Z') dudit verrou opposée à ladite surface d'appui (S₁, S'₁), s'étend au delà d'un cyclindre géométrique (V, W) de glissement desdits secteurs l'un contre l'autre.

2. Ratière selon la revendication 1, **caractérisée en ce que** ledit secteur globalement cylindrique (S₂-S₃), (S'₂-S'₃) dudit verrou (10, 11) est convexe et centré sur ledit axe géométrique de pivotement (Z-Z'), ledit secteur et ladite surface (S₁, S'₁) d'appui étant disposés de part et d'autre dudit axe.

3. Ratière selon la revendication 1, **caractérisée en ce que** ledit secteur globalement cylindrique (S₂, S'₂) dudit verrou (110, 111) est concave et centré sur ledit axe géométrique de pivotement (Z-Z'), ladite section de ladite butée (104b, 104d) ayant une longueur (L_{104b}) supérieure au diamètre (d) dudit cylindre géométrique de glissement (V, W).

4. Ratière selon l'une des revendications précédentes, **caractérisée en ce que** les efforts (F₂, F₃) exercés par lesdites butées (4b, 4d ; 104b, 104d) sur ledit verrou (10, 11 ; 110, 111) sont essentiellement radiaux par rapport audit axe de pivotement (Z-Z') et opposés, lesdits efforts étant dirigés sensiblement selon ladite direction (Y-Y').

5. Ratière selon l'une des revendications précédentes, **caractérisée en ce que** ledit verrou (10, 11 ; 110, 111) est en appui contre des moyens élastiques (14, 15 ; 114, 115) de rappel en position engagée par rapport audit disque (8 ; 108).

6. Ratière selon l'une des revendications précédentes, **caractérisée en ce que** ladite butée (4b-4e ; 104b-104e) forme au moins un logement (12, 13 ; 112, 113) de réception dudit verrou (10, 11 ; 110, 111), ledit logement étant disposé en déport par rapport à une surface principale (4a) dudit élément d'actionnement (4 ; 104), en regard de la tranche (8a) dudit disque (8).

7. Ratière selon la revendication 6, **caractérisée en ce qu'**elle comprend deux logements (12, 13 ; 112, 113) de réception de verrous (10, 11 ; 110, 111) entre lesquels est défini un espace (17 ; 117) de coulissement d'un organe de manoeuvre (16 ; 116) de deux verrous (10, 11 ; 110, 111) reçus dans lesdits logements, ledit organe de manoeuvre étant apte à exercer sur lesdits verrous un effort de poussée (F₁), à l'encontre de moyens élastiques de rappel (14, 15 ; 114, 115), ledit effort produisant un couple de rotation de chaque verrou autour de son axe de pivotement (Z-Z').

8. Ratière selon la revendication 7, **caractérisée en ce que** ledit organe de manoeuvre (16 ; 116) est sélectivement commandé en déplacement par l'un de deux leviers oscillants (18, 19) pilotés par un dispositif de lisage (20).

9. Ratière selon l'une des revendications 7 ou 8, **caractérisée en ce que** lesdits logements (12, 13 ; 112, 113) sont fermés par un capot commun (21 ; 121) de retenue desdits verrous (10, 11 ; 110, 111), desdits moyens de rappel (14, 15 ; 114, 115) et dudit organe de manoeuvre (16 ; 116) par rapport audit élément d'actionnement (4 ; 104).

10. Métier à tisser équipé d'une ratière (1-21 ; 101-121) selon l'une des revendications précédentes.

## Claims

1. A rotary dobby for a loom, comprising, at each of its blades,
- an oscillating part (5), attached to a heald frame (3) and associated with an actuating element (4; 104) mounted loose on a main shaft (1; 101) of said dobby,
- a disc (8; 108) integral with said main shaft, and
- at least one controlled bolt (10, 11; 110, 111) for coupling said element and said disc in rotation, said bolt forming a surface (S₁, S'₁) of selective bearing against a surface (8b - 8e; 108b, 108c) of the edge (8a; 108a) of said disc, **characterised in that** said bolt (10, 11; 110, 111) is articulated, by sliding contact of at least one sector (S₂, S₃, S'₂, S'₃) which is cylindrical overall against a complementary sector (Σ_{b}, Σ_{c}, Σ_{d}, Σₑ) of a stop (4b-4e, 104b-104e) external to said bolt and integral with said actuating element (4; 104) and **in that** the section of said stop, in a radial direction (Y-Y') relative to a geometric pivot axis (Z-Z') of said bolt which is opposed to said bearing surface (S₁, S'₁), extends beyond a geometric cylinder (V, W) of sliding of said sectors against one another.

2. A dobby according to Claim 1, **characterised in that** said overall cylindrical sector (S₂-S₃), (S'₂-S'₃) of said bolt (10, 11) is convex and centred on said geometric pivot axis (Z-Z'), said sector and said bearing surface (S₁, S'₁) being arranged on either side of said axis.

3. A dobby according to Claim 1, **characterised in that** said overall cylindrical sector (S₂, S'₂) of said bolt (110, 111) is concave and centred on said geometric pivot axis (Z-Z'), said section of said stop (104b, 104d) having a length (L_{104b}) greater than the diameter (d) of said geometric cylinder of sliding (V, W).

4. A dobby according to one of the preceding claims, **characterised in that** the forces (F₂, F₃) exerted by said stops (4b, 4d; 104b, 104d) on said bolt (10, 11; 110, 111) are essentially radial to said pivot axis (Z-Z') and opposed, said forces being directed substantially in said direction (Y-Y').

5. A dobby according to one of the preceding claims, **characterised in that** said bolt (10, 11; 110, 111) bears against elastic means (14, 15; 114, 115) for returning to the engaged position relative to said disc (8; 108).

6. A dobby according to one of the preceding claims, **characterised in that** said stop (4b-4e; 104b-104e) forms at least one housing (12, 13; 112, 113) for receiving said bolt (10, 11; 110, 111), said housing being arranged offset relative to a main surface (4a) of said actuating element (4; 104), opposite the edge (8a) of said disc (8).

7. A dobby according to Claim 6, **characterised in that** it comprises two housings (12, 13; 112, 113) for receiving bolts (10, 11; 110, 111) between which there is defined a sliding space (17; 117) for a manipulating element (16; 116) for two bolts (10, 11; 110, 111) held in said housings, said manipulating element being capable of exerting a thrust force (F₁) on said bolts, counter to elastic return means (14, 15; 114, 115), said force producing a rotating torque of each bolt around its pivot axis (Z-Z').

8. A dobby according to Claim 7, **characterised in that** said manipulating element (16; 116) is selectively controlled by one of two oscillating levers (18, 19) driven by a reading-in device (20).

9. A dobby according to one of Claims 7 or 8, **characterised in that** said housings (12, 13; 112, 113) are closed by a common cap (21; 121) for retaining said bolts (10, 11; 110, 111), said return means (14, 15; 114, 115) and said manipulating element (16; 116) relative to said actuating element (4; 104).

10. A loom equipped with a dobby (1-21; 101-121) according to one of the preceding claims.

## Patentansprüche

1. Rotationsschaftmaschine für Webmaschinen mit, für jeden seiner Schäfte,
- einem Schwingteil (5), gekuppelt mit einem Schaftrahmen (3) und verbunden mit einem Betätigungselement (4; 104), beweglich auf eine Hauptachse (1; 101) der genannten Schaftmaschine montiert,
- einer Scheibe (8; 108), fest verbunden mit der genannten Hauptwelle, und
- wenigstens einem gesteuerten Riegel (10, 11 ; 110, 111) zur Rotationskupplung des genannten Elements mit der genannten Scheibe, wobei der genannte Riegel eine Fläche (S₁, S'₁) zur selektiven Abstützung auf einer Fläche (8b - 8e; 108b, 108c) des Rands (8a; 108a) der genannten Scheibe umfasst,
**dadurch gekennzeichnet,**
**dass** der genannte Riegel (10, 11 ; 110, 111) durch Gleitkontakt wenigstens eines global zylindrischen Sektors (S₂, S₃, S'₂, S'₃) gelenkig verbunden ist mit einem komplementären Sektor (Σ_{b}, Σ_{c}, Σ_{d}, Σₑ) eines Anschlags (4b-4e, 104b-104e), außerhalb des genannten Riegels befindlich und fest verbunden mit dem genannten Betätigungselement (4 ; 104), und dass der Querschnitt bzw. Abschnitt des genannten Anschlags in einer Richtung (Y-Y'), radial in Bezug auf eine geometrische Schwenkachse (Z-Z') des genannten Riegels, der genannten Abstützfläche (S₁, S'₁) entgegengesetzt, sich über einen geometrischen Zylinder (V, W) des Gleitbewegungskontakts zwischen den beiden genannten Sektoren hinaus erstreckt.

2. Schaftmaschine nach Anspruch 1, **dadurch gekennzeichnet, dass** der genannte global zylindrische Sektor (S₂, S₃), (S'₂, S'₃) des genannten Riegels (10, 11) konvex ist und auf die genannte geometrische Schwenkachse (Z-Z') zentriert ist, wobei der genannte Sektor und die genannte Abstützfläche (S₁, S'₁) beiderseits der genannten Achse angeordnet sind.

3. Schaftmaschine nach Anspruch 1, **dadurch gekennzeichnet, dass** der genannte global zylindrische Sektor (S₂, S'₂) des genannten Riegels (110, 111) konkav ist und auf die genannte geometrische Schwenkachse (Z-Z') zentriert ist, wobei der genannte Querschnitt bzw. Abschnitt des genannten Anschlags (104b, 104d) eine Länge (L_{104b}) hat, die größer ist als der Durchmesser (d) des genannten geometrischen Gleitbewegungskontakt-Zylinders (V, W).

4. Schaftmaschine nach einem der vorangehenden Ansprüche, **dadurch gekennzeichnet, dass** die durch die genannten Anschläge (4b, 4d ; 104b, 104d) auf den genannten Riegel (10, 11 ; 110, 111) ausgeübten Kräfte (F₂, F₃) in Bezug auf die genannte Schwenkachse (Z-Z') im Wesentlichen radial sind, und entgegengesetzt, wobei diese Kräfte im Wesentlichen entsprechend der genannten Richtung (Y-Y') ausgerichtet sind.

5. Schaftmaschine nach einem der vorangehenden Ansprüche, **dadurch gekennzeichnet, dass** der genannte Riegel (10, 11 ; 110, 111) sich auf elastischen Einrichtungen (14, 15 ; 114, 115) zur Rückstellung in eine in Bezug auf die genannte Scheibe (8 ; 108) eingenommene Stellung abstützt.

6. Schaftmaschine nach einem der vorangehenden Ansprüche, **dadurch gekennzeichnet, dass** der genannte Anschlag (4b-4e ; 104b-104e) wenigstens einen Sitz (12, 13 ; 112, 113) zur Aufnahme des genannten Riegels (10, 11 ; 110, 111) bildet, wobei dieser Sitz in Bezug auf eine Hauptfläche (4a) des genannten Betätigungselements (4 ; 104) versetzt angeordnet ist, dem Rand (8a) der genannten Scheibe (8) gegenüberstehend.

7. Schaftmaschine nach Anspruch 6, **dadurch gekennzeichnet, dass** sie zwei Sitze (12, 13 ; 112, 113) zur Aufnahme der Riegel (10, 11 ; 110, 111) umfasst, zwischen denen ein Gleitraum (17 ; 117) eines Manövrierorgans (16 ; 116) der beiden in den genannten Sitzen aufgenommenen Riegel (10, 11 ; 110, 111) definiert ist, wobei das genannte Manövrierorgan fähig ist, auf die genannten Riegel eine den elastischen Rückstelleinrichtungen (14, 15 ; 114, 115) entgegenwirkende Druckkraft (F₁) auszuüben und diese Kraft bei jedem Riegel ein Drehmoment erzeugt, um seine Schwenkachse (Z-Z') herum.

8. Schaftmaschine nach Anspruch 7, **dadurch gekennzeichnet, dass** das genannte Manövrierorgan (16 ; 116) eine selektiv durch einen der beiden Schwinghebel (18, 19) gesteuerte Bewegung ausführt, wobei diese beiden letzteren ihrerseits durch eine Einlesemaschine (20) gesteuert werden.

9. Schaftmaschine nach einem der Ansprüche 7 oder 8, **dadurch gekennzeichnet, dass** die genannten Sitze (12, 13 ; 112, 113) in Bezug auf das genannte Betätigungselement (4 ; 104) verschlossen werden durch eine gemeinsame Rückhaltehaube bzw. -kappe (21 ; 121) der genannten Riegel (10, 11 ; 110, 111), der genannten Rückstelleinrichtungen (14, 15 ; 114, 115) und des genannten Manövrierorgans (16 ; 116).

10. Webmaschine, ausgerüstet mit einer Schaftmaschine (1-21 ; 101-121) nach einem der vorangehenden Ansprüche.
